# EUROPEAN PATENT APPLICATION

(11) **EP 4 691 741 A1**
(43) Date of publication of application: **11.02.2026**
(21) Application number: 24778681.7
(22) Date of filing: 05.02.2024
(51) Int. Cl.: B29C 65/02, B08B 5/04, F26B 5/04

(54) **FILM FORMING DEVICE**

(30) Priority: 31.03.2023 JP 2023059020
(71) Applicant: TAIKISHA LTD., Tokyo 160-6129 (JP)
(72) Inventor: YOSHIOKA Hidehisa, Tokyo 160-6129 (JP); HAYASHI Yoshikazu, Tokyo 160-6129 (JP); HIGASHI Yoshio, Tokyo 160-6129 (JP); WATANABE Seidai, Tokyo 160-6129 (JP)
(74) Representative: Mathys & Squire
(86) International application number: PCT/JP2024/003646
(87) International publication number: WO 2024/202536

(57) **Abstract**

A film forming apparatus comprising: a first forming line for conveying a target object in a state of being placed on a jig, and performing a cleaning operation of cleaning the target object, a lamination operation of laminating a film onto the target object after the cleaning operation, and a removal operation of removing a portion of the film laminated onto the target object after the lamination operation; and a jig returning line for returning the jig used on the first forming line from an exit of the first forming line to an entrance of the first forming line.

## Description

### TECHNICAL FIELD

The present invention relates to a film forming apparatus.

### BACKGROUND ART

In conventional spray painting, a spacious facility and an apparatus for processing paint mist are essential, and a significant amount of energy is required. Technological innovation is necessary to realize carbon neutrality, and, as decorating methods that replace conventional painting, dry decoration technologies that use vacuum film formation technologies have been attracting attention. PTL1 discloses a vacuum forming apparatus that laminates a sheet-shaped decorating material onto a resin base material.

### CITATION LIST

### PATENT LITERATURE

PTL1: Japanese Patent Laid-Open No. 2008-284771

### SUMMARY OF INVENTION

### TECHNICAL PROBLEM

However, in the technique disclosed in Patent Literature 1, it is necessary to replace a jig that supports a resin base material, in accordance with the shape of the resin base material. However, jigs are heavy, and it is often troublesome to move and replace them. Thus, there is an issue that sheet-shaped decorating materials cannot be efficiently laminated onto resin base materials having various shapes, and thus, it is difficult to realize efficient film formation.

The present invention has been made in light of the aforementioned issue, and aims to provide a technique to realize efficient film formation.

### SOLUTION TO PROBLEM

In order to achieve the above aim, the film forming apparatus according to one aspect of the present invention is characterized by comprising:
a first forming line for conveying a target object in a state of being placed on a jig, and performing a cleaning operation of cleaning the target object, a lamination operation of laminating a film onto the target object after the cleaning operation, and a removal operation of removing a portion of the film laminated onto the target object after the lamination operation; and
a jig returning line for returning the jig used on the first forming line from an exit of the first forming line to an entrance of the first forming line.

### ADVANTAGEOUS EFFECTS OF INVENTION

According to the present invention, it is possible to realize efficient film formation.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
FIG. 1 is a diagram showing an example of the overall configuration of a film forming apparatus according to a first embodiment.
FIG. 2 is a diagram showing a configuration example of a control device according to the first embodiment.
FIG. 3A is a flowchart showing a procedure of film forming processing on a production line according to the first embodiment.
FIG. 3B is a flowchart showing a procedure of film forming processing on a production line according to the first embodiment.
FIG. 4 is a diagram showing an example of the overall configuration of a film forming apparatus according to a second embodiment.
FIG. 5 is a diagram showing a configuration example of a control device according to the second embodiment.
FIG. 6A is a diagram showing a control example of vacuum pumps according to the second embodiment (alternating control is not performed).
FIG. 6B is a diagram showing a control example of a vacuum pump according to the second embodiment (alternating control is performed).
FIG. 7A is a diagram showing a control example of heaters according to the second embodiment (alternating control is not performed).
FIG. 7B is a diagram showing a control example of a heater according to the second embodiment (alternating control is performed).

### DESCRIPTION OF EMBODIMENTS

Hereinafter, embodiments will be described in detail with reference to the attached drawings. Note, the following embodiments are not intended to limit the scope of the claimed invention, and limitation is not made to an invention that requires a combination of all features described in the embodiments. Two or more of the multiple features described in the embodiments may be combined as appropriate. Furthermore, the same reference numerals are given to the same or similar configurations, and redundant description thereof is omitted.

### First Embodiment

In the present embodiment, a configuration example of a production line for performing film formation by laminating a film onto a target object placed on a jig will be described. In the present embodiment, a description will be given in which a target object onto which a film is laminated is a front bumper or a rear bumper of a vehicle (such as a four-wheeled vehicle), but the target object is not limited thereto, and the present invention can be applied to various objects. Decoration processing can be easily performed by changing the color of a film in accordance with the color of the vehicle.

### Overall Configuration of Production Line

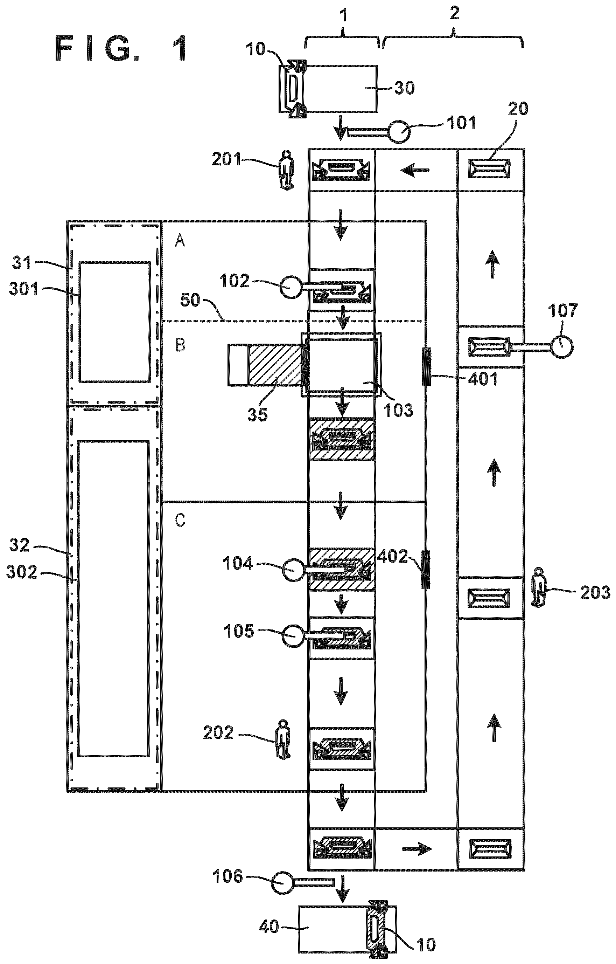

FIG. 1 is a diagram showing an example of the overall configuration of a film forming apparatus according to the present embodiment. The arrows in the figure each indicate the conveyance direction of a target object 10 alone, a jig 20 on which the target object 10 is placed, or the jig 20 alone. The target object 10 that has been transported on a carriage 30 is gripped by a conveyance apparatus 101 and is placed on the jig 20 at a start position (entrance) of a forming line 1. A first operator 201 checks whether or not the target object 10 is appropriately placed on the jig 20 and manually wipes the target object 10 placed on the jig 20 to remove grease. If the target object 10 is not appropriately placed, the position is adjusted.

Next, in a state of being placed on the jig 20, the target object 10 is conveyed along the forming line 1 to a dust removal area A where a dust removal apparatus 102 is installed. This conveyance can be performed, for example, automatically by a belt-conveyor apparatus and/or manually by an operator. In the dust removal area A, the dust removal apparatus 102 performs a cleaning operation on the target object 10. The dust removal apparatus 102 is a dust removal apparatus that performs a cleaning operation, for example, by suctioning waste. For example, a dust removal apparatus having a wiping part such as a mop wipes the surface of the target object 10 and suctions waste in parallel, thereby performing a cleaning operation without discharging waste in the space of the dust removal area A.

After a cleaning operation is performed by the dust removal apparatus 102, the target object 10 placed on the jig 20 is conveyed to a lamination area B where a vacuum lamination apparatus 103 is disposed. Control is performed such that a film 35 is unwound and pulled out to cover the upper side of the target object 10 that has been conveyed into the vacuum lamination apparatus 103, and tension is applied to the film 35 inside the vacuum lamination apparatus 103. Once the target object 10 is conveyed (slid in) into the vacuum lamination apparatus 103 and the film 35 is unwound and set at a predetermined position, the internal space of the vacuum lamination apparatus 103 is evacuated, a heating operation is performed, and a lamination operation of laminating the film 35 onto the target object 10 is performed. Note that the order of the vacuum operation of evacuating the internal space of the vacuum lamination apparatus 103 and the heating operation of heating the internal space of the vacuum lamination apparatus 103 is not limited. The heating operation may be performed after the vacuum operation, the vacuum operation may be performed after the heating operation, or the vacuum operation and the heating operation may be performed at overlapping timings. Furthermore, the method for conveying the target object 10 into the vacuum lamination apparatus 103 is not limited to the sliding-in method. For example, the target object 10 may be lifted together with the jig 20 using a lifter (not illustrated) or a gripping robot and be conveyed into the vacuum lamination apparatus 103. In this case, a configuration may be adopted in which a dividing jig (not illustrated) other than the jig 20 is fixedly disposed inside the vacuum lamination apparatus 103 in advance, and the jig 20 on which the target object 10 placed is placed on the divided jig.

The film 35 is used by unwinding a roll film that is in a wound state as with rolled paper. The roll film can be replaced with films of various colors. For example, in a case where the target object 10 is a bumper for a red vehicle body, a red roll film is used, and in a case where the target object 10 is a bumper for a blue vehicle body, the roll film is replaced with a blue roll film and the blue roll film is used, thereby enabling decoration in a desired color. There is no limitation to film color variations, and the roll film can also be replaced with various films having different patterns, three-dimensional textures, and the like, and with functional films, for example. Once the lamination operation is completed, the target object 10 is conveyed to the outside of the vacuum lamination apparatus 103 (slide-out). Control is performed such that, simultaneously with this slide-out, the next target object 10 is slid into the vacuum lamination apparatus 103. The method for conveying the target object 10 to the outside of the vacuum lamination apparatus 103 is not limited to the sliding-out method. For example, the target object 10 may be lifted together with the jig 20 using a lifter (not illustrated) or a gripping robot and be conveyed to the outside of the vacuum lamination apparatus 103. In this case, the jig 20, which is located on a dividing jig (not illustrated) and on which the target object 10 is placed, may be conveyed to the outside of the vacuum lamination apparatus 103.

Through the lamination operation performed by the vacuum lamination apparatus 103, the film 35 is laminated onto the target object 10, the jig 20, and surrounding regions thereof. The target object 10 and the jig 20 are conveyed to a removal area C in this state. Note that a film curing apparatus (e.g., a UV apparatus) may be provided downstream of the vacuum lamination apparatus 103 and upstream of a removal apparatus 104. A configuration may be adopted in which, after film curing processing is performed by the film curing apparatus, the target object 10 and the jig 20 are conveyed to the removal area C. Furthermore, a film finishing apparatus may be provided in place of the film curing apparatus. The removal apparatus 104 performs a removal operation of removing unnecessary film portions by trimming the target object 10 in this state. For example, a CO₂ laser may be used to trim the film 35. The target object 10 is then conveyed to the position of a removal apparatus 105, which collects film scraps (cut-off pieces of the film generated by the trimming processing). Here, the removal apparatus 105 performs an operation of peeling off the film scraps generated through trimming, gripping them, and placing them into a waste box. Note that a release agent is applied in advance to a portion of the jig 20 that exclude the target object 10, and the surrounding surfaces of the target object 10 and the jig 20 (the placement surface of the jig 20), such that the film can be more easily peeled off by the removal apparatus 105.

Next, the target object 10 and the jig 20 are further conveyed to the position of a second operator 202. The second operator 202 performs processing for manually peeling off film scraps that could not be removed by the removal apparatus 105, to make the target object 10 and the jig 20 clean, and performs quality check, and, as necessary, repair work and the like. The target object 10 and the jig 20 are then conveyed to the outside of the removal area C, the target object 10 is gripped by a conveyance apparatus 106, and the target object 10 in a state of being laminated with the film 35 is placed on a carriage 40.

Note that the second operator 202 may be positioned in a working environment space that is separate from the removal apparatus 104 and the removal apparatus 105. That is, the removal area C may be divided by defining, as a removal area C1, the space in which the removal apparatuses 104 and 105 are disposed, and defining, as a separate removal area C2, the space in which the second operator 202 is disposed. In that case, the removal areas C1 and C2 may be in fluid communication with each other along the forming line 1. At this time, control may be performed such that the pressure in the removal area C1 is lower than that in the removal area C2, thereby achieving a configuration in which air is prevented from flowing from the removal area C1 into the removal area C2. Accordingly, the second operator 202 can be isolated from dust, smoke, and the like generated by the operations of the removal apparatuses 104 and 105, and thus the working environment can be improved.

On the other hand, after the target object 10 is gripped and moved by the conveyance apparatus 106, only the jig 20 remains. This jig 20 is returned along a jig returning line 2 to be reused. The jig 20 is conveyed to the position of a third operator 203 along the jig returning line 2. The third operator 203 cleans the waste remaining after trimming. The third operator 203 also applies a release agent to the jig 20. Note that a configuration may be adopted in which the operation of cleaning the waste and the operation of applying a release agent are automatically performed by a robot. The jig 20 is then further conveyed to the position of a conveyance apparatus 107 along the jig returning line 2. The conveyance apparatus 107 performs an operation of replacing the jig 20 in accordance with the type of target object 10. When the replacement operation is necessary, the conveyance apparatus 107 grips the jig 20, moves the jig 20 out from the jig returning line 2, and moves a different jig onto the jig returning line 2 from outside. The jig 20 is then conveyed along the jig returning line 2 to the start position (entrance) of the forming line 1, where the target object 10 is placed on the jig 20. From this point on, the same operations are repeated.

In FIG. 1, a vacuum pump 301 is disposed in a pump chamber 31. The vacuum pump 301 is connected to the vacuum lamination apparatus 103 and evacuates a predetermined space inside the vacuum lamination apparatus 103 under the control of a control device 302. The control device 302 is disposed in a control chamber 32. In the control chamber 32, an operator (not illustrated) monitors the overall control of the production line performed by the control device 302.

In FIG. 1, an air supply apparatus 401 supplies air into the dust removal area A and the lamination area B such that the pressures in the dust removal area A and the lamination area B become positive relative to atmospheric pressure. In addition, an exhaust apparatus 402 exhausts air such that the pressure in the removal area C becomes negative relative to the atmospheric pressure. Note that the space where the first operator 201 is located is in fluid communication with the dust removal area A. Similarly, the dust removal area A and the lamination area B are in fluid communication with each other, the lamination area B and the removal area C are in fluid communication with each other, and the removal area C and the space where the conveyance apparatus 106 is located are in fluid communication with each other. Note that the dust removal area A and the lamination area B are partitioned by a partition 50, but the spaces thereof are in fluid communication with each other.

### Configuration of Control Device

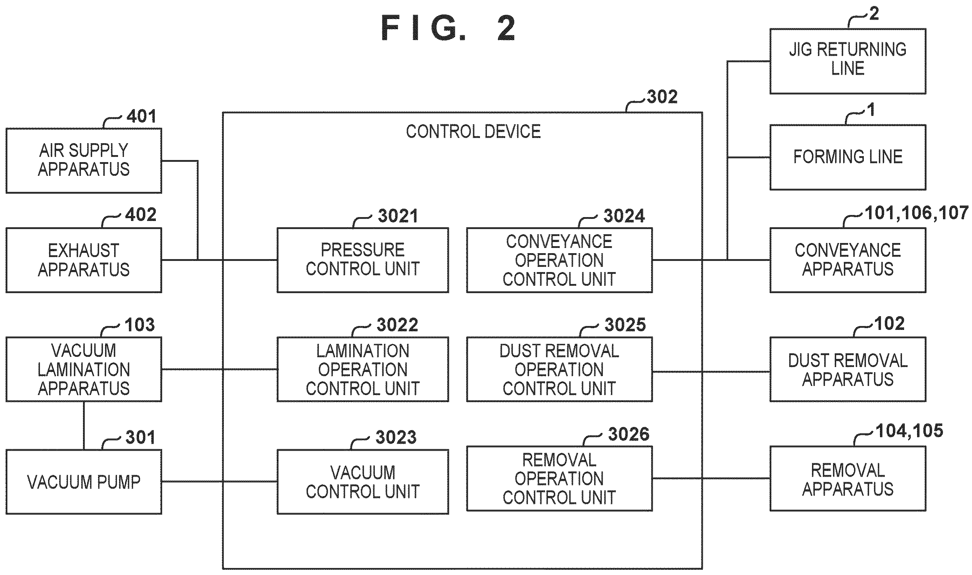

Next, a configuration example of the control device according to the present embodiment will be described with reference to FIG. 2. The control device 302 includes a pressure control unit 3021, a lamination operation control unit 3022, a vacuum control unit 3023, a conveyance operation control unit 3024, a dust removal operation control unit 3025, and a removal operation control unit 3026. The control device 302 operates using one or more CPUs (Central Processing Units), and various operations are executed by the one or more CPUs reading and executing computer programs stored in one or more memories (not illustrated). In addition, the control device 302 may include a display unit such as a liquid crystal display, a notification unit such as a speaker, and an input unit such as a keyboard and a switch. A configuration may be adopted in which an operator in the control chamber 32 can monitor the status of the production line using these units, and stop the operation of the line in accordance with the situation.

The pressure control unit 3021 controls the pressures in the spaces of the dust removal area A, the lamination area B, and the removal area C by controlling the operations of the air supply apparatus 401 and/or the exhaust apparatus 402. In the present embodiment, the pressure control unit 3021 performs control so as to achieve positive pressures in the dust removal area A and the lamination area B by controlling the air supply apparatus 401 to supply clean air into these areas from the outside. The air in the cleanroom is discharged from the dust removal area A toward the upstream side of the line (the first operator 201 side) along the forming line 1 via an opening portion (not illustrated) of the entrance of the dust removal area A for conveying the target object 10. Furthermore, the air in the cleanroom is discharged along the forming line 1 from the lamination area B toward the downstream side of the line (the removal area C side) via an opening portion (not illustrated) provided between the areas B and C for conveying the target object 10. Accordingly, the interiors of the dust removal area A and the lamination area B can be formed as a cleanroom.

The pressure control unit 3021 also controls the exhaust apparatus 402 to exhaust air such that the pressure in the removal area C becomes negative relative to the atmospheric pressure. Therefore, air flows along the forming line 1 from the lamination area B toward the downstream side of the line (the removal area C side) via the opening portion (not illustrated) between the areas B and C for conveying the target object 10. Also, air flows from the space in which the conveyance apparatus 106 is positioned toward the upstream side of the line (the removal area C side) along the forming line 1 via an opening portion (not illustrated) on the exit side of the area C, the opening portion being for conveying the target object 10.

The lamination operation control unit 3022 controls the lamination operation of the film 35 by controlling the vacuum lamination apparatus 103. Specifically, an operation of unwinding and stretching out the film 35 over the target object 10, which has been slid into the vacuum lamination apparatus 103, is performed. The lamination operation control unit 3022 further performs control so as to lower a chamber (not illustrated) in a state where the film 35 is stretched out, and the vacuum control unit 3023 evacuates the interior of the vacuum lamination apparatus 103 and performs heating processing. The vacuum control unit 3023 controls the pressure in the vacuum lamination apparatus 103 and create a vacuum state by controlling the vacuum pump 301. Note that, as described above, the order of the vacuum operation and the heating operation is not limited. Accordingly, the operation of laminating the film 35 onto the target object 10 is performed. The chamber is then lifted, and the target object 10, which has been laminated with the film 35, is slid out from the vacuum lamination apparatus 103.

The conveyance operation control unit 3024 controls various conveyance operations. The conveyance operation control unit 3024 controls operations of the conveyance apparatus 101 to perform an operation of gripping the target object 10 and moving the target object 10 to the starting point of the forming line 1 (the point where the first operator 201 performs operations = the entrance of the forming line 1). The conveyance operation control unit 3024 also controls operations of a belt-conveyor apparatuses (not illustrated) provided on at least a portion of the forming line 1 and the jig returning line 2. The conveyance operation control unit 3024 also controls operations of the conveyance apparatus 106 and the conveyance apparatus 107. The dust removal operation control unit 3025 controls operations of the dust removal apparatus 102. The removal operation control unit 3026 controls operations of the removal apparatus 104 and the removal apparatus 105.

### Processing

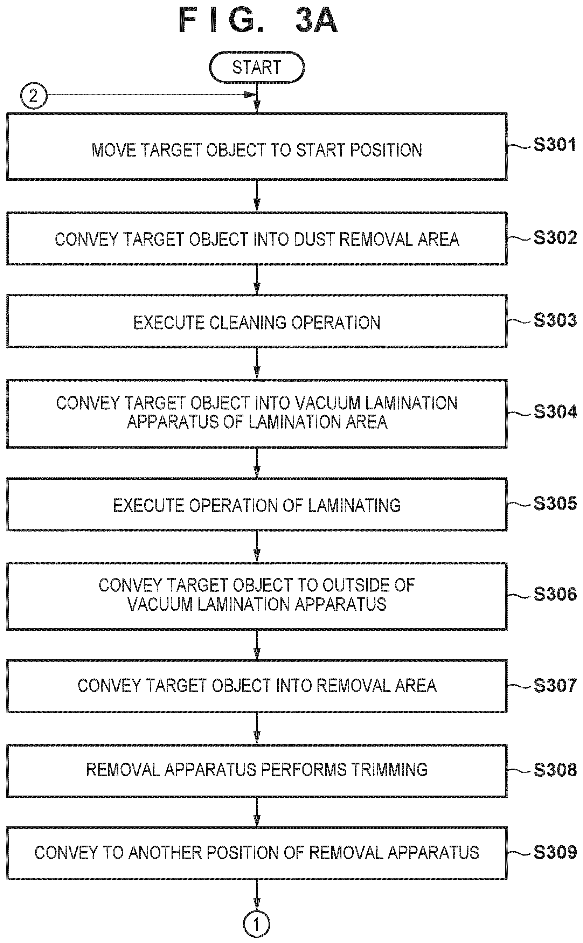

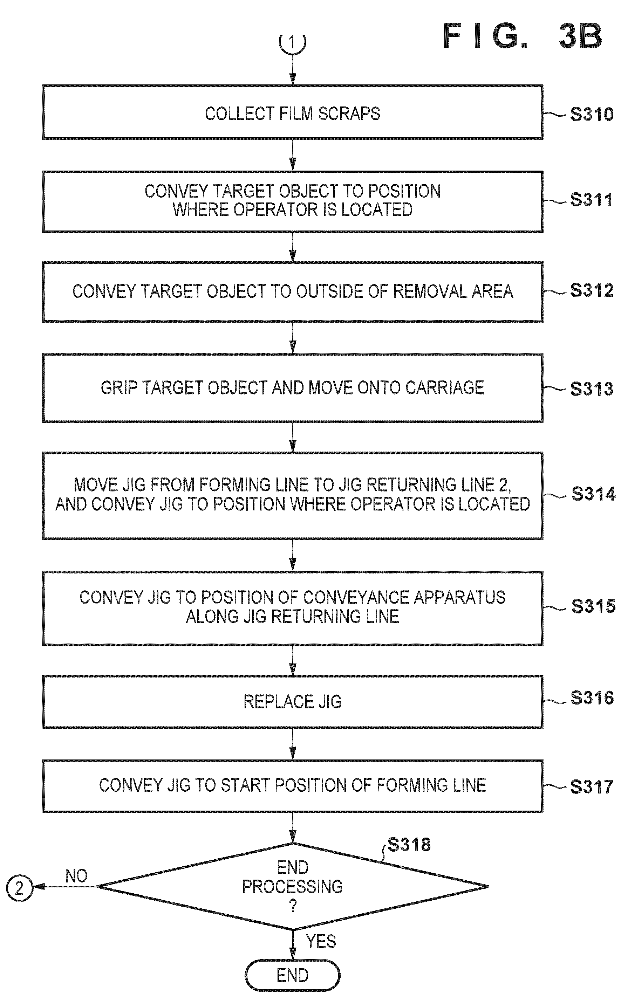

Next, a procedure of film forming processing on the production line according to the present embodiment will be described with reference to the flowcharts in FIGS. 3A and 3B. Note that the pressures in the dust removal area A, the lamination area B, and the removal area C are controlled as described with reference to FIG. 1.

In S301, the conveyance operation control unit 3024 controls the conveyance apparatus 101 to grip the target object 10 placed on the carriage 30, move the target object 10 to the start position (entrance) of the forming line 1, and place the target object 10 on the jig 20 that has been conveyed to the start position. The first operator 201 checks whether the target object 10 is appropriately placed on the jig 20, and if there is any misalignment, performs an adjustment operation. The first operator 201 also manually wipes the target object 10 placed on the jig 20 to remove grease.

In S302, the conveyance operation control unit 3024 controls the belt-conveyor apparatus (not illustrated) to convey the jig 20, on which the target object 10 is placed, into the dust removal area A. Note that the apparatus used here is not limited to the belt-conveyor apparatus, and may instead be a roller conveyor, a linear conveyor, a roller-top conveyor, or the like. In S303, the dust removal operation control unit 3025 controls the dust removal apparatus 102 to perform a cleaning operation. In S304, the conveyance operation control unit 3024 controls the belt-conveyor apparatus (not illustrated) to convey the jig 20, on which the target object 10 is placed, into the lamination area B, and further into the vacuum lamination apparatus 103 (slide-in).

In S305, the lamination operation control unit 3022 controls the vacuum lamination apparatus 103, and the vacuum control unit 3023 controls the vacuum pump 301, thereby performing a lamination operation of the film 35. In S306, the conveyance operation control unit 3024 controls the belt-conveyor apparatus (not illustrated) to convey the jig 20, on which the target object 10 is placed, to the outside of the vacuum lamination apparatus 103 (slide-out).

In S307, the conveyance operation control unit 3024 controls the belt-conveyor apparatus (not illustrated) to convey the jig 20, on which the target object 10 (laminated with the film 35) is placed, into the removal area C. In S308, the removal operation control unit 3026 controls the removal apparatus 104 to perform a removal operation of removing unnecessary portions of the film 35 by trimming the film 35 laminated onto the target object 10 placed on the jig 20.

In S309, the conveyance operation control unit 3024 controls the belt-conveyor apparatus (not illustrated) to convey the jig 2010, on which the target object 10 is placed and which has been subjected to trimming performed by the removal apparatus 104, to the removal apparatus 105. In S310, the removal operation control unit 3026 controls the removal apparatus 105 to perform a collection operation of peeling off the film scraps generated through trimming performed by the removal apparatus 104, gripping them, and putting them into a waste box.

In S311, the conveyance operation control unit 3024 controls the belt-conveyor apparatus (not illustrated) to convey the jig 20, which has been subjected to the removal operation performed by the removal apparatus 104 and the removal apparatus 105, and on which the target object 10 is placed, to the position where the second operator 202 is located. The second operator 202 performs processing for manually peeling off film scraps that could not be removed by the removal apparatus 105, to make the target object 10 and the jig 20 clean. The second operator 202 also performs quality check by visual inspection, and, as necessary, repair work and the like.

In S312, the conveyance operation control unit 3024 controls the belt-conveyor apparatus (not illustrated) to convey the jig 20, on which the target object 10 is placed, to the outside of the removal area C. In S313, the conveyance operation control unit 3024 controls the conveyance apparatus 106 to grip the target object 10 that has been laminated with the film 35 and has reached the end position (exit) of the forming line 1, and to convey the target object 10 onto the carriage 40.

In S314, the conveyance operation control unit 3024 controls the belt-conveyor apparatus (not illustrated) to move the jig 20 from the forming line 1 to the jig returning line 2, and convey the jig 20 to the position where the third operator 203 is located. The third operator 203 cleans waste remaining after the removal operation performed by the removal apparatus 104 and the removal apparatus 105. The third operator 203 also applies a release agent to the jig 20. Note that a configuration may be adopted in which the operation of cleaning waste and the operation of applying a release agent are automatically performed by a robot.

In S315, the conveyance operation control unit 3024 controls the belt-conveyor apparatus (not illustrated) to convey the jig 20 to the position of the conveyance apparatus 107 along the jig returning line 2.

In S316, the conveyance operation control unit 3024 controls the conveyance apparatus 107 to perform an operation of replacing the jig 20 in accordance with the type of target object 10. For example, when the target object 10 is changed from a front bumper to a rear bumper, a jig for the front bumper is replaced with a jig for the rear bumper. Note that, when the jig 20 does not need to be replaced, this step is skipped.

In S317, the conveyance operation control unit 3024 controls the belt-conveyor apparatus (not illustrated) to convey the jig 20 to the start position (entrance) of the forming line 1.

In S318, the conveyance operation control unit 3024 determines whether or not to end a series of processing. For example, when film forming processing on a predetermined number of target objects 10 is complete, it can be determined that the procedure is to be ended. If determination is made as Yes in this step, the procedure is ended. On the other hand, if determination is made as No in this step, the procedure returns to S301, where the procedure is repeated. This describes a series of processing in FIGS. 3A and 3B.

As described above, the present embodiment provides a film forming apparatus including: a forming line for conveying a target object in a state of being placed on a jig, and performing a cleaning operation of cleaning the target object, a lamination operation for laminating a film onto the target object after the cleaning operation, and a removal operation of removing a portion of the film laminated onto the target object after the lamination operation; and a jig returning line for returning the jig used on the forming line, from the exit of the forming line to the entrance.

Accordingly, the target object can be efficiently decorated, and efficient film formation can be realized.

### Variation of First Embodiment

In the first embodiment above, a description has been given in which the dust removal apparatus 102 is a dust removal apparatus that performs a cleaning operation by suctioning waste. However, the dust removal apparatus 102 may be a dust removal apparatus that performs a cleaning operation by blowing away waste (such as a static-eliminating air blower). In that case, the partition 50 separates the dust removal area A and the lamination area B, and the interior of the lamination area B is formed as a cleanroom. An opening portion lies along the forming line 1 between the dust removal area A and the lamination area B, which are thereby in fluid communication with each other along the forming line 1. Control is performed through an operation performed by the air supply apparatus 401 in the lamination area B such that the pressure inside the lamination area B is positive relative to atmospheric pressure, while an exhaust apparatus (not illustrated) is separately provided in the dust removal area A to perform control such that the pressure in the dust removal area A is negative relative to the atmospheric pressure. Accordingly, the dust removal area A has a negative pressure, the lamination area B has a positive pressure, and the removal area C has a negative pressure, enabling the lamination area B to be formed as a cleanroom. Alternatively, the entire area including the dust removal area A and the lamination area B in FIG. 1 may be configured as a single cleanroom (a single lamination area), with the dust removal apparatus 102 being provided outside these areas (e.g., at a position on the upstream side of the line relative to the dust removal area A in FIG. 1).

### Second Embodiment

In the first embodiment, a film forming apparatus that includes one forming line and one jig returning line has been described. In contrast, in the present embodiment, a film forming apparatus that includes two forming lines and one jig returning line will be described. By sharing the jig returning line, space saving and cost reduction can be realized. Also in the present embodiment, a target object to which a film is to be laminated is described as a front bumper or rear bumper of a vehicle (such as a four-wheeled vehicle), but, similarly, the target object is not limited to these, and the present invention can be applied to various objects.

### Overall Configuration of Production Line

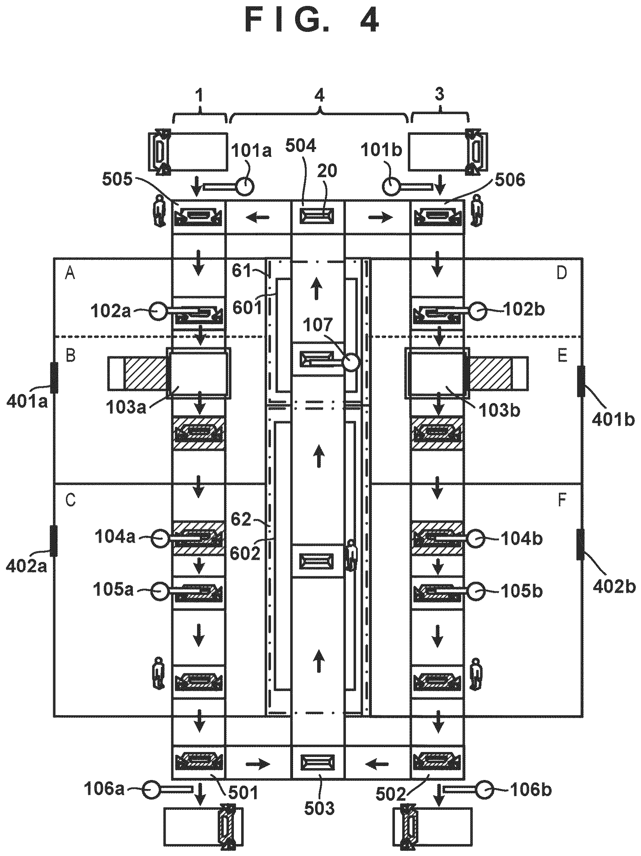

FIG. 4 is a diagram showing an example of the overall configuration of a film forming apparatus according to the present embodiment. In the present embodiment, two forming lines share one jig returning line. The basic configuration is similar to the configuration described in the first embodiment with reference to FIG. 1. Note that, in the present embodiment, a pump chamber 61 and a vacuum pump 601 are disposed between a first forming line 1 and a second forming line 3, and a control chamber 62 and a control device 602 are disposed between the first forming line 1 and the second forming line 3.

Moreover, a jig returning line 4 according to the present embodiment is provided to extend through a higher position than the pump chamber 61 and the control chamber 62, between the forming line 1 and a forming line 3. That is to say, the jig returning line 4 is disposed above the heights at which the forming line 1 and the forming line 3 are disposed, between the forming line 1 and the forming line 3. Therefore, when moving the jig 20 from an end position (exit) 501 of the forming line 1 to a position 503, the jig 20 is lifted by a lifting apparatus (not illustrated). Also, when moving the jig 20 from an end position (exit) 502 of the forming line 3 to the position 503, the jig 20 is lifted by the lifting apparatus (not illustrated). The jig 20 conveyed from the forming line 1 and the jig 20 conveyed from the forming line 3 is lifted using the one lifting apparatus.

In addition, the jig 20 conveyed to a position 504 along the jig returning line 4 is moved to a start position (entrance) 505 of the forming line 1 or a start position (entrance) 506 of the forming line 3. At that time, the jig 20 is lowered by a lifting apparatus (not illustrated). The jig 20 that is to be conveyed to the forming line 1 and the jig 20 that is to be conveyed to the forming line 3 is lowered using the one lifting apparatus.

As shown in FIG. 4, on the forming line 1, a conveyance apparatus 101a, a dust removal apparatus 102a, a vacuum lamination apparatus 103a, a removal apparatus 104a, a removal apparatus 105a, the conveyance apparatus 106a, and the like are provided. Similarly to the first embodiment, the dust removal area A, the lamination area B, and the removal area C are provided. Furthermore, on the forming line 3, a conveyance apparatus 101b, a dust removal apparatus 102b, a vacuum lamination apparatus 103b, a removal apparatus 104b, a removal apparatus 105b, a conveyance apparatus 106b, and the like are provided so as to be symmetrical with respect to the jig returning line 4 relative to the corresponding apparatuses. Similarly to the first embodiment, a dust removal area D, a lamination area E, and a removal area F are provided. In FIG. 4, the forming line 1 and the forming line 3 are arranged in a symmetrical layout with respect to the jig returning line 4, and the conveyance apparatus 107 is shared between the two forming lines. The operators are also arranged in a similar manner. Note that, as a matter of course, there is no need to adopt a completely symmetrical layout, and a partially asymmetrical layout may be adopted.

By the two forming lines sharing the pump chamber 61, the control chamber 62, the lifting apparatuses (not illustrated), and the conveyance apparatus 107 in this manner, the overall manufacturing cost of the production line can be reduced. In addition, space saving can be realized.

### Configuration of Control Device

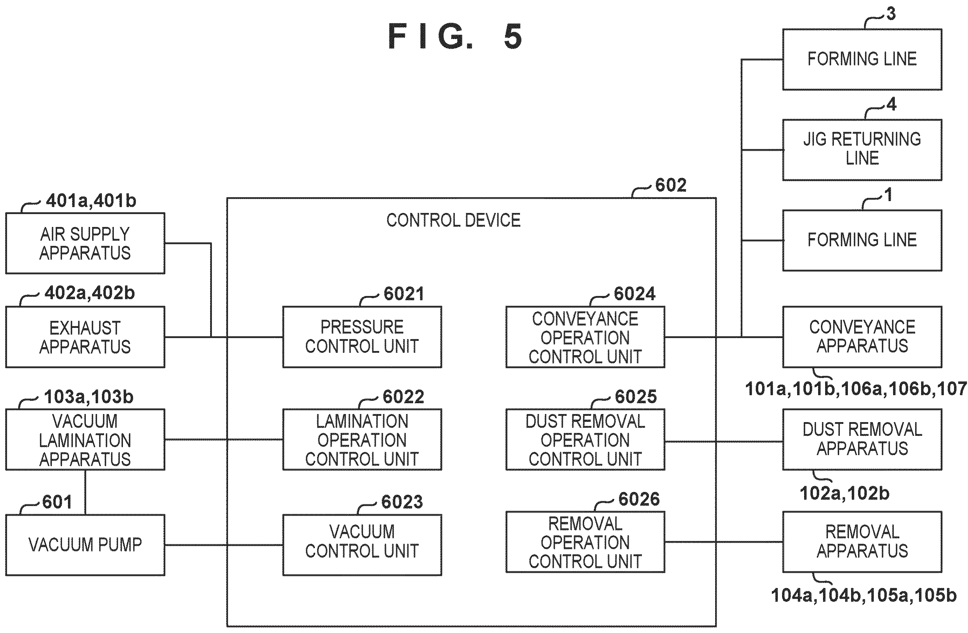

Next, a configuration example of the control device 602 according to the present embodiment will be described with reference to FIG. 5. Similarly to the first embodiment, the control device 602 includes a pressure control unit 6021, a lamination operation control unit 6022, a vacuum control unit 6023, a conveyance operation control unit 6024, a dust removal operation control unit 6025, and a removal operation control unit 6026.

The pressure control unit 6021 controls the pressures in the spaces of the dust removal area A, the lamination area B, and the removal area C by controlling operations of an air supply apparatus 401a and/or an exhaust apparatus 402a. Details of the control content are the same as those of the first embodiment. The pressure control unit 6021 also controls the pressures in the spaces of the dust removal area D, the lamination area E, and the removal area F by controlling operations of an air supply apparatus 401b and/or an exhaust apparatus 402b. The pressures in the dust removal area D, the lamination area E, and the removal area F are respectively controlled in a similar manner to the pressures in the dust removal area A, the lamination area B, and the removal area C.

The lamination operation control unit 6022 controls the vacuum lamination apparatus 103a and the vacuum lamination apparatus 103b to control lamination operations of the film 35 on the forming line 1 and the forming line 3. Details of the control content are the same as those of the first embodiment. The vacuum control unit 6023 controls the vacuum pump 601 to bring the pressure in the vacuum lamination apparatus 103a or 103b into a vacuum state to ensure that the lamination operation on the forming line 1 or the lamination operation on the forming line 3 is performed in a vacuum state. Details of the control content are the same as those of the first embodiment.

The conveyance operation control unit 6024 controls various conveyance operations. The conveyance operation control unit 6024 controls operations of the conveyance apparatus 101a to perform an operation of gripping the target object 10 and moving the target object 10 to the start point (entrance) of the forming line 1. The conveyance operation control unit 6024 also controls operations of the conveyance apparatus 101b to perform an operation of gripping the target object 10 and moving the target object 10 to the start point (entrance) of the forming line 3. The conveyance operation control unit 6024 also controls operations of a belt-conveyor apparatus (not illustrated) provided in at least a portion of the forming line 1, the forming line 3, and the jig returning line 4. Also, the conveyance operation control unit 6024 controls operations of the conveyance apparatus 106a, the conveyance apparatus 106b, and the conveyance apparatus 107. Details of the control content are the same as those of the first embodiment.

The dust removal operation control unit 6025 controls operations of the dust removal apparatus 102a and the dust removal apparatus 102b. Details of the control content are the same as those of the first embodiment. The removal operation control unit 6026 controls operations of the removal apparatus 104a, the removal apparatus 104b, the removal apparatus 105a, and the removal apparatus 105b. Details of the control content are the same as those of the first embodiment.

### Control of Production Line

In the present embodiment, a configuration is adopted in which the two forming lines (the forming line 1 and the forming line 3) share the one vacuum pump 301. That is to say, the vacuum pump 601 used for the lamination operation performed on the forming line 1 is also used for the lamination operation performed on the forming line 3. In view of this, the vacuum control unit 6023 according to the present embodiment controls the vacuum pump 601 such that a timing at which the lamination operation is performed on the forming line 1 differs from a timing at which the lamination operation is performed on the forming line 3. In this manner, by adopting a configuration in which the vacuum lamination apparatus 103a and the vacuum lamination apparatus 103b are, for example, alternatingly operated, efficient lamination operations can be realized using one vacuum pump. In addition, by making a timing of a lamination operation different between the forming lines, a timing at which the jig 20 is conveyed from each forming line to the position 503 can be made different. This makes it possible to shorten the takt time. Therefore, the production efficiency can be improved.

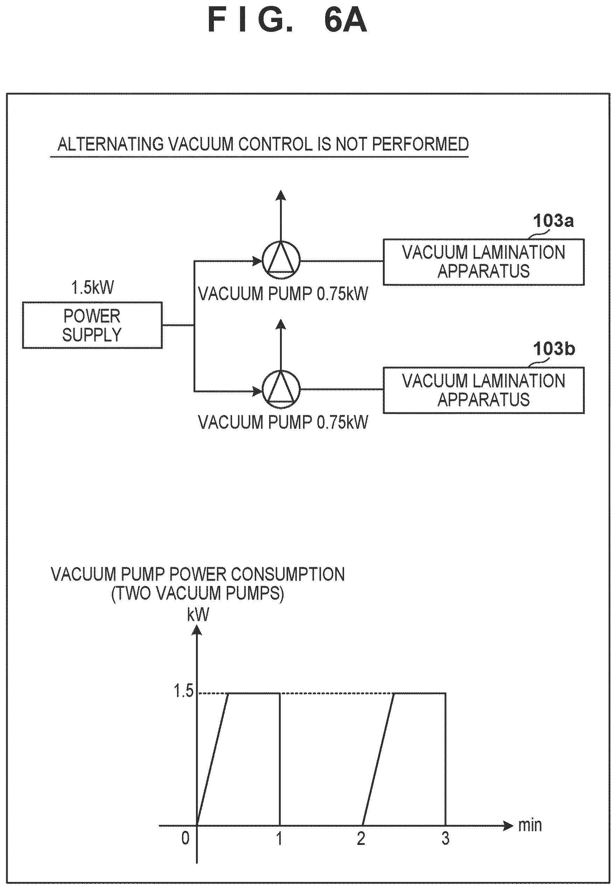

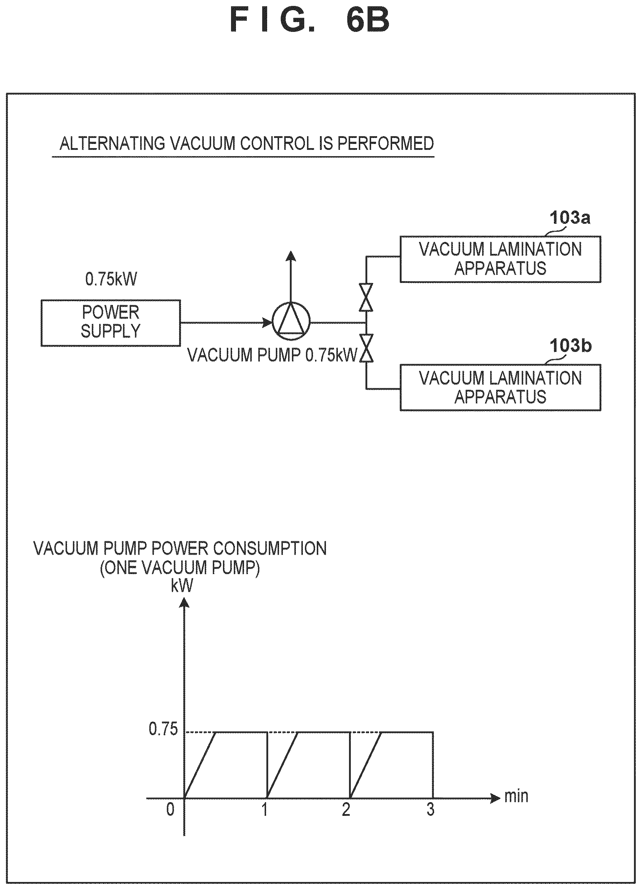

Here, a control example of the vacuum pump according to the present embodiment will be described with reference to FIGS. 6A and 6B. FIG. 6A shows a control example in which alternating control is not performed, and FIG. 6B shows a control example in which alternating control is performed. A case will be described in which the cycle time of a forming operation is two minutes. In addition, the power consumption of a single vacuum pump is assumed to be 0.75 kW. As shown in FIG. 6A, in a case where alternating vacuum control is not performed, a vacuum pump needs be provided for each of the vacuum lamination apparatuses 103a and 103b. In this case, two vacuum pumps are required, resulting in a total power consumption of 1.5 kW. On the other hand, as shown in FIG. 6B, in a case where alternating vacuum control is performed as in the present embodiment, a single vacuum pump 601 is operated alternately for the vacuum lamination apparatuses 103a and 103b. For example, the vacuum control unit 6023 controls the vacuum pump 601 to evacuate the interior of the vacuum lamination apparatus 103a during a period of 0 to 1 minute based on a reference clock time, evacuate the interior of the vacuum lamination apparatus 103b during a period of 1 to 2 minutes, and evacuate the interior of the vacuum lamination apparatus 103a again during a period of 2 to 3 minutes. Accordingly, it is possible to increase the operating rate of the vacuum pump while reducing the power consumption of the vacuum pump. Furthermore, since the number of pumps can be reduced, cost reduction can be achieved.

As described above, in the present embodiment, by the two forming lines sharing the pump chamber 61 (the vacuum pump 601), the control chamber 62 (the control device 602), the lifting apparatuses (not illustrated), and the conveyance apparatus 107, the overall manufacturing cost of the production line can be reduced. In addition, if operation timings of vacuum lamination apparatuses on the respective forming lines are made different, efficient lamination operations can be realized, and the takt time can be shortened to improve the production efficiency. Therefore, the target object can be efficiently decorated, and efficient film formation can be realized.

Furthermore, by disposing the jig returning line 4 above the pump chamber 61 and the control chamber 62, it is possible to reduce the area (space) required for the entire production line. Therefore, a compact production line can be provided even in a limited site area.

### Variation of Second Embodiment

In the second embodiment, an example has been described in which the jig returning line 4 is positioned above the heights of the forming line 1 and the forming line 3, but there is no limitation thereto. Similarly to the first embodiment, the height of the jig returning line 4 may be the same as the heights of the forming line 1 and the forming line 3. In that case, for example, the jig returning line 4 may be provided between the forming line 1 and the pump chamber 61 and control chamber 62. Alternatively, the jig returning line 4 may be provided between the forming line 3 and the pump chamber 61 and control chamber 62.

In addition, in the second embodiment, an example has been described in which two forming lines share a vacuum pump, but what is shared is not limited to a vacuum pump. Although a heating operation is also executed inside the vacuum lamination apparatuses, a power supply for heating heaters (not illustrated) in the respective vacuum lamination apparatuses may be shared between the two forming lines.

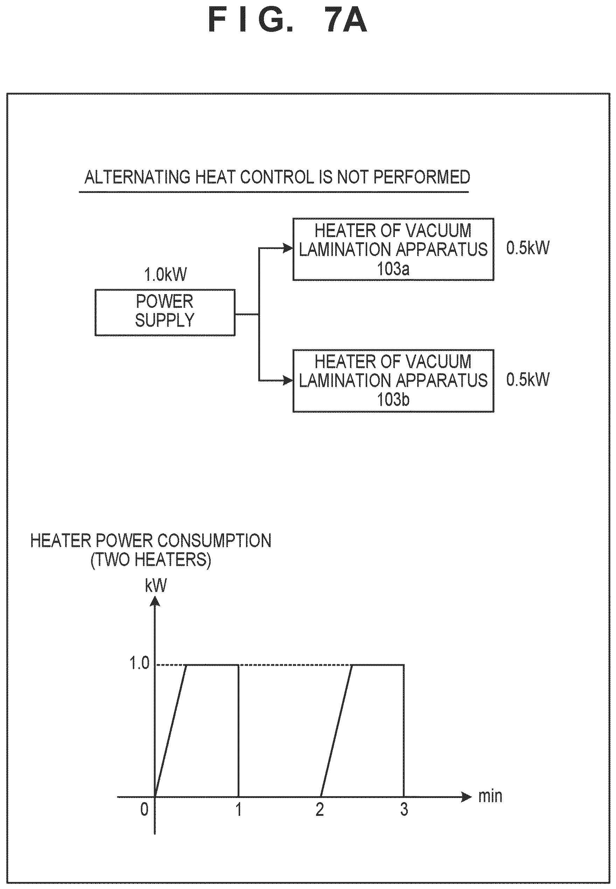

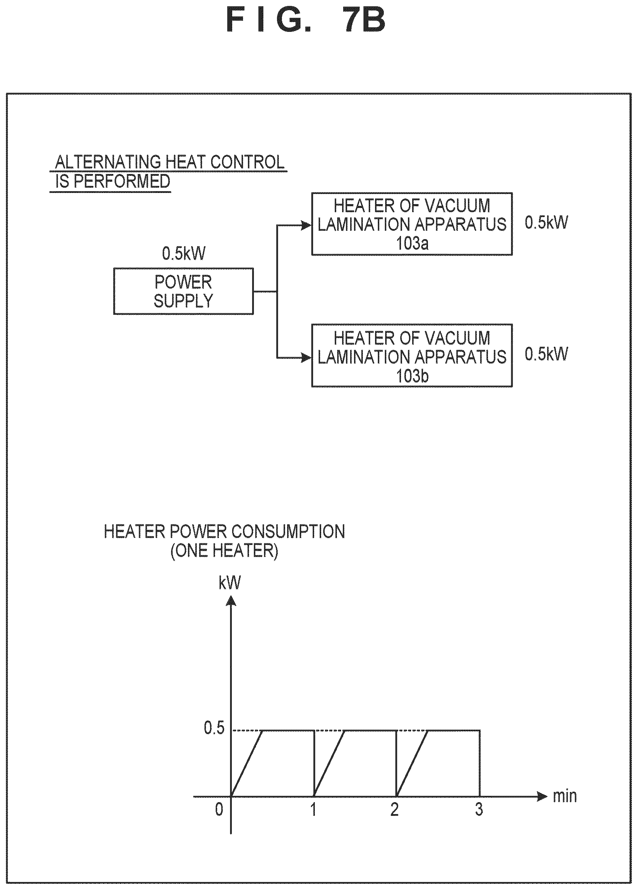

Here, a control example of a heater according to the present embodiment will be described with reference to FIGS. 7A and 7B. FIG. 7A shows a control example in which alternating control is not performed, and FIG. 7B shows a control example in which alternating control is performed. A case will be described in which the cycle time of a forming operation is two minutes. In addition, the power consumption of a single heater is assumed to be 0.5 kW. As shown in FIG. 7A, in a case where alternating control is not performed, there is a need to supply power to both the heater of the vacuum lamination apparatus 103a and the heater of the vacuum lamination apparatus 103b. In this case, the power supply is equivalent to that of two units, and the total power consumption is 1.0 kW. On the other hand, in a case where a control example in which alternating control is performed as shown in FIG. 7B, power is alternatingly supplied to the heater of the vacuum lamination apparatus 103a and the heater of the vacuum lamination apparatus 103b. For example, the lamination operation control unit 6022 controls a power supply (not illustrated) of the control device 602 to heat the interior of the vacuum lamination apparatus 103a during a period of 0 to 1 minute based on a reference clock time, heat the interior of the vacuum lamination apparatus 103b during a period of 1 to 2 minutes, and heat the interior of the vacuum lamination apparatus 103a again during a period of 2 to 3 minutes. In this case, the power consumption of the power supply is 0.5 kW. Accordingly, it is possible to increase the operating rate of the power supply while reducing the power consumption of the power supply. In addition, since a high-output power supply is not required, the cost can be reduced.

The invention is not limited to the foregoing embodiments, and various variations/changes are possible within the spirit of the invention.

This application claims priority from Japanese Patent Application No. 2023-059020 filed March 31, 2023, which is hereby incorporated by reference herein.

## Claims

1. A film forming apparatus **characterized by** comprising:
a first forming line for conveying a target object in a state of being placed on a jig, and performing a cleaning operation of cleaning the target object, a lamination operation of laminating a film onto the target object after the cleaning operation, and a removal operation of removing a portion of the film laminated onto the target object after the lamination operation; and
a jig returning line for returning the jig used on the first forming line from an exit of the first forming line to an entrance of the first forming line.

2. The film forming apparatus according to claim 1, **characterized in that**
the first forming line includes a first area where the cleaning operation is performed, a second area where the lamination operation is performed, and a third area where the removal operation is performed.

3. The film forming apparatus according to claim 2, **characterized by** further comprising
pressure control means for performing control such that a pressure in the second area is positive relative to atmospheric pressure, and for performing control such that a pressure in the third area is negative relative to the atmospheric pressure,
wherein the second area and the third area are in fluid communication with each other.

4. The film forming apparatus according to claim 2, **characterized by** further comprising
pressure control means for performing control such that a pressure in the second area is positive relative to atmospheric pressure,
wherein the second area forms a cleanroom.

5. The film forming apparatus according to claim 4, **characterized by** further comprising
a dust removal apparatus that performs the cleaning operation by blowing away waste,
wherein the dust removal apparatus is disposed in the first area.

6. The film forming apparatus according to claim 2, **characterized by** further comprising
pressure control means for performing control such that pressures in the first area and the second area are positive relative to atmospheric pressure,
wherein the first area and the second area form one cleanroom.

7. The film forming apparatus according to claim 6, **characterized by** further comprising
a dust removal apparatus that performs the cleaning operation by suctioning waste,
wherein the dust removal apparatus is disposed in the first area.

8. The film forming apparatus according to any one of claims 1 to 7, **characterized by** further comprising
vacuum control means for performing control such that the lamination operation on the first forming line is performed in a vacuum state.

9. The film forming apparatus according to claim 8, **characterized by** further comprising
a vacuum lamination apparatus that performs the lamination operation,
wherein the vacuum control means performs control so as to evacuate the vacuum lamination apparatus.

10. The film forming apparatus according to any one of claims 1 to 7, **characterized by** further comprising
a second forming line for conveying a target object in a state of being placed on a jig, and performing a cleaning operation of cleaning the target object, a lamination operation for laminating a film onto the target object after the cleaning operation, and a removal operation for removing a portion of the film laminated onto the target object after the lamination operation, the second forming line being disposed along the first forming line,
wherein it is possible to return the jig used on the first forming line and the jig used on the second forming line from an exit of the first forming line or an exit of the second forming line to an entrance of the first forming line or an entrance of the second forming line, using the jig returning line.

11. The film forming apparatus according to claim 10, **characterized in that**
the jig returning line is disposed between the first forming line and the second forming line.

12. The film forming apparatus according to claim 10 or 11, **characterized by** further comprising
vacuum control means for performing control such that the lamination operation on the first forming line or the lamination operation on the second forming line is performed in a vacuum state.

13. The film forming apparatus according to claim 12, **characterized by** further comprising:
a first vacuum lamination apparatus that performs the lamination operation on the first forming line; and
a second vacuum lamination apparatus that performs the lamination operation on the second forming line,
wherein the vacuum control means performs control so as to evacuate one of the first vacuum lamination apparatus and the second vacuum lamination apparatus.

14. The film forming apparatus according to any one of claims 10 to 13, **characterized in that**
a vacuum pump that is used for the lamination operation on the first forming line is used for the lamination operation on the second forming line.

15. The film forming apparatus according to any one of claims 10 to 14, **characterized in that**
a timing at which the lamination operation on the first forming line is performed differs from a timing at which the lamination operation on the second forming line is performed.

16. The film forming apparatus according to any one of claims 10 to 15, **characterized in that**
the first forming line and the second forming line are symmetrical with respect to the jig returning line.

17. The film forming apparatus according to any one of claims 10 to 16, **characterized in that**
the jig returning line is disposed above heights at which the first forming line and the second forming line are disposed.

18. The film forming apparatus according to any one of claims 10 to 17, **characterized in that**
a timing at which an operation of heating a film is performed in the lamination operation on the first forming line differs from a timing at which an operation of heating a film is performed in the lamination operation on the second forming line.
